# EUROPEAN PATENT APPLICATION

(11) **EP 1 178 414 A1**
(43) Date of publication of application: **06.02.2002**
(21) Application number: 00116615.6
(22) Date of filing: 01.08.2000
(51) Int. Cl.: G06F 17/60

(54) **Method and apparatus for inputting data into spreadsheet documents**

(71) Applicant: SUN MICROSYSTEMS, INC., Palo Alto, California 94303 (US)
(72) Inventor: Breuer, Matthias, 21220 Seevetal (DE)
(74) Representative: Betten & Resch

(57) **Abstract**

A computer-implemented method for enabling a user to input data into a document comprising cells being arranged in columns and rows, said method comprising: enabling the user to directly input data into individual cells; enabling the user to input references into cells to define the content of a cell by referring to the content of another cell being referenced; and further comprising: providing the user with an option to directly input data into a cell which references another cell without deleting the reference to the other cell.

## Description

### FIELD OF THE INVENTION

The present invention relates to the input of data into a document comprising cells, and in particular the invention relates to the input of data into spreadsheet documents.

### DESCRIPTION OF THE RELATED ART

Apart from word processing applications software spreadsheet software nowadays is one of the most commonly used software tools. A spreadsheet program allows the user to input data into cells which are arranged into columns and rows, and by providing calculation tools it enables the user to easily evaluate data which can be arranged in a table form. Such an evaluation can be done by calculating the values of cells by referring to the content of other cells, or it can be done by graphically displaying the content of the spreadsheet document, or by a combination of both of them.

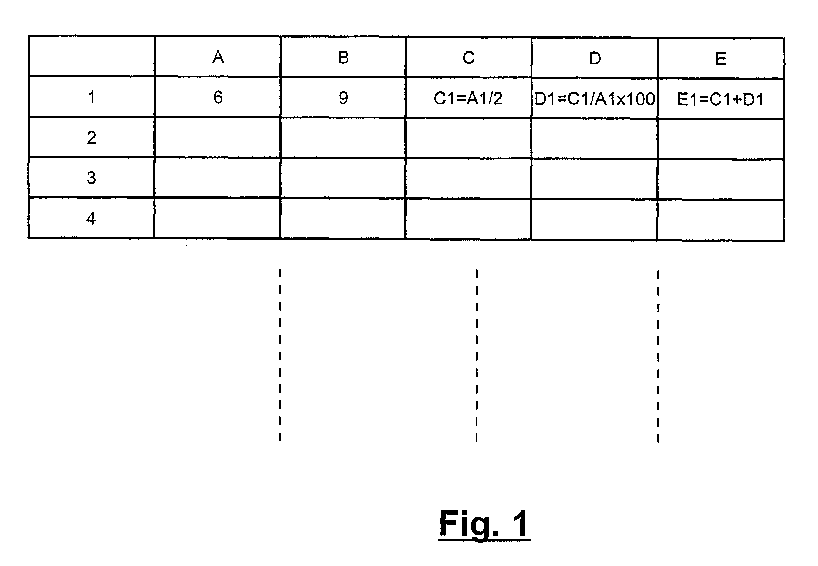

In known spreadsheet programs the user is provided with a graphic display of a table (of a spreadsheet) similar to the one schematically illustrated in Fig. 1. The table data is arranged in columns named "A" to "E" and into lines numbered from "1" to "4" in the example of Fig. 1. A user can then enter data into the individual cells, such as for example the number "6" shown in the cell "A1".

Apart from the graphic visualization tools provided by spreadsheet programs the probably most important feature which such spreadsheet programs offer to the user is the possibility to calculate the content of the individual cells by referring to other cells. Known spreadsheet programs such as "Excel" produced by Microsoft Corporation, or "StarCalc" produced by Sun Microsystems provide the possibility to enter for individual cells functions or formulas which define how the content of those cells is to be derived by referring to the content of other cells. For that purpose usually on the graphical user interface there is some location where the user can define the reference and the function or formula for the individual cells. For the sake of simplicity, in Fig. 1 the formulas defining the references are shown directly in the individual cells.

After having input such references, the content of the so defined cells (in case of Fig. 1 cells C1, D1, and E1) is automatically calculated by the program by referring to the content of the referenced cells.

One problem involved with such kind of spreadsheet data input mechanisms is that once a formula or a function referencing one cell to another has been input, the thereby defined cell content is fixed in the sense that it only depends on the content of the cell which it references, however, there is no possibility to directly influence the content of the individual cell which is defined by a formula or a function except by overriding the formula.

Let us now for example assume that cell "B1" references cell "A1", that "C1" references "B1", that "D1" references "C1", and so forth, until "H1" references "G1". In such a case where there is a linear chain of references it is only possible to amend the content of cell "A1" and to then look how the other cells change their content depending on the change of the content of "A1". It might, however, for example be desirable to have a look at how the content of "D1" changes if "C1" assumes a particular value. This, however, is not possible since all cells from "B1" to "H1" can only change their content in response to a change of the content of cell "A1".

It would be desirable to provide the user with a more flexible input interface for spreadsheet programs.

### SUMMARY OF THE INVENTION

According to an embodiment of the present invention there is provided an option to the user which enables him to input data directly into cells the content of which is defined by referencing another cell. With this option the user can in a much more flexible manner check how an amendment of a content of an individual cell affects the content of other cells, without deleting the reference of said indivdiual cell to another cell.

Preferably such an input interface is implemented in a spreadsheet program, however, it may be implemented into any program allowing the user to calculate the content of a cell of a table by referencing any other cell of said table.

Preferably there is carried out an automatic calculation of the contents of the other cells after the user has entered the data into the individual cell by using said option. This makes it easy to follow the changes of the contents of the other cells in dependence of the manually inputted value entered directly into the individual cell.

Preferably the option is provided in the case where the cell into which the data is to be inputted forms part of a circular reference. This assures that all cells contained in the circular reference contain self-consistent data after entering the new data by using the input option, since the content of all cells will be recalculated after entering the new data manually so that after the recalculation the cells forming the circular reference contain data which again is fully self-consistent.

A further implementation of the present invention provides a computer system for enabling a user to input data into a document comprising cells being arranged in columns and rows, the computer system comprising a memory for storing the document and a processing unit for carrying out the steps of enabling the user to directly input data into individual cells, enabling the user to input references into cells to define the content of a cell by referring to the content of another cell being referenced, and further providing the user with an option to directly input data into a cell which references another cell without deleting the reference to the other cell.

A still further implementation of the present invention may be realized by a computer program for enabling a user to input data into a document comprising cells arranged in columns and rows, where a user is provided with an option to directly input data into a cell which references another cell without deleting the reference (formula or function) to the other cell.

A program code may be embodied in any form of computer program product. A computer program product comprises a medium which stores or transports computer-readable code, or in which computer-readable code can be embeded. Some examples of computer program products are CD-ROM disks, ROM carts, floppy disks, magnetic tapes, computer hard drives, servers on a network and signals transmitted over the network representing a computer-readable program code.

In accordance with an embodiment of the present invention a user is enabled to input data into spreadsheet documents in a much for flexible manner than in the prior art. A user can directly enter data into individual cells referencing another cell without deleting the references so that a user can much better check and evaluate how a change in the content of an arbitrary individual cell affects other cells referencing this cell or being referenced by this cell.

The above-mentioned and other features, utilities, and advantages of the invention will become apparent from the following detailed description of preferred embodiments of the invention together with the accompanying drawings.

### BRIEF DESCRIPTION OF THE DRAWINGS

- Fig. 1: schematically illustrates a spreadsheet according to the prior art.
- Fig. 2: schematically illustrates an input method according to an embodiment of the present invention.
- Fig. 3: schematically illustrates an input method according to a further embodiment of the present invention.
- Fig. 4: shows a flowchart illustrating an embodiment according to the present invention.
- Fig. 5: schematically illustrates the dependencies in a circular reference in an embodiment of the present invention.
- Fig. 6: is a schematic illustration of a computer system to which the present invention may be applied.
- Fig. 7: is a schematic illustration of a client-server configuration to which the present invention may also be applied.

### DETAILED DESCRIPTION

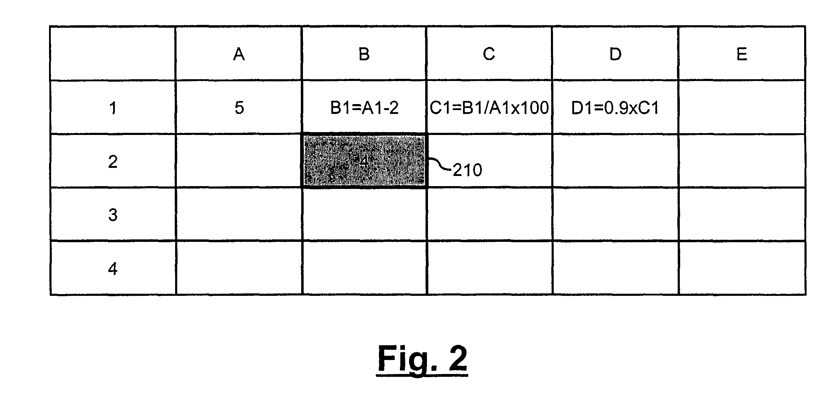

A first embodiment according to the present invention is now explained in connection with Fig. 2. In Fig. 2 there is shown a spreadsheet where a value "5" has been inputted into cell "A1", and where the cells "B1", "C1", and "D1" contain references which define the content of those cells by referencing their respective neighbours to the left. The content of cell "B1" is defined as being equal to "A1-2", "C1" is defined as the percentage of "B1" in relation to the content of "A1", and so on.

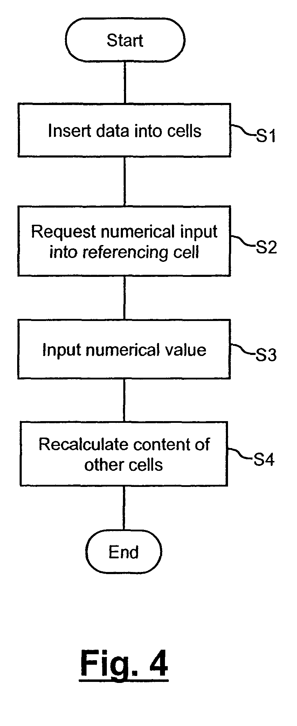

In response to a request by the user, such as a click on the right mouse button and a selection of a corresponding menu item, the user is provided with an input option to input directly a data value into an individual cell which contains a reference definition. This is exemplarily shown in Fig. 2 for the cell "B1". After the request by the user an input field 210 opens which is highlighted and which enables the user to directly input a particular value which in case of Fig. 4 is shown as the value "4". Such an input, however, does not override the formula.

After having completed this input the content of the cells "C1" and "D1" is recalculated based on the value of "B1" being "4" instead of "3" as it was before. The user can thereby monitor how the contents of other cells which reference the certain individual cell into which a value has been directly inputted are affected by this input. Such a feature can be desirable in many circumstances, for example in cases where it is to be evaluated how certain percentage values affect other parameters calculated in complex spreadsheet documents.

The above embodiment, however, has the disadvantage that the value contained in cell "A1" has not been changed, since this cell does not reference any other cell.

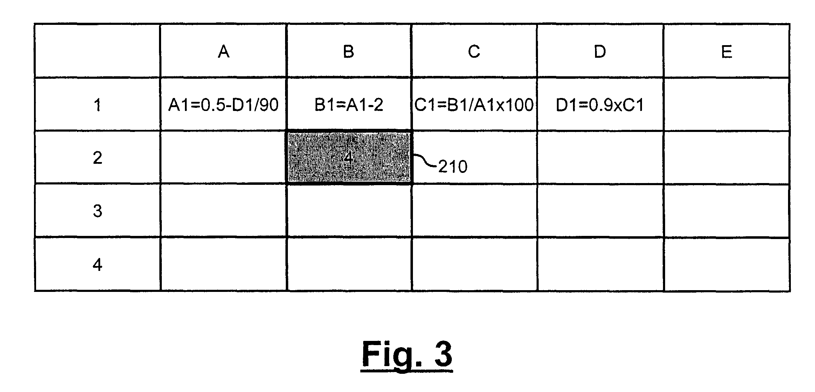

This disadvantage can be solved by another embodiment of the present invention explained hereinafter in connection with Fig. 3.

Fig. 3 shows a spreadsheet document identical to the one of Fig. 2, except for the fact that the cell "A1" now contains a reference to the cell "D1". The corresponding formula can be derived by replacing "C1" in the formula for cell "D1" through the corresponding definitions in the cells "C1" and "B1". Thereby "A1" can be expressed as depending on "D1" and this formula now is contained in cell "A1".

Thereby the cells "A1" to "D1" together form a "circular reference", each of them referencing another cell in the circle and being itself referenced by another cell in the circle.

With this configuration in case of inputting a value of "4" directly into cell "B1" in a manner similar as explained in connection with Fig. 2, subsequently the contents of all other cells "C1", "D1", and "A1" will change depending on the value inputted into the cell "B1". Also the value for "B1" will again be recalculated by corresponding fomrula in the circular reference, and assuming that no rounding error occurs, the values contained in the cells will be self-consistent.

In case of the user option for directly inputting data values into cells containing a reference such as a formula or a function, it is particularly advantageous if those cells form part of a circular reference, since as explained above subsequently a fully self-consistent set of cell contents can be attained.

According to a third embodiment of the present invention the user is provided with an algebraic tool assisting the user with changing a non-circular reference into a circular reference. If for example a user starts from a document as shown in Fig. 2, and if the user wishes to "close the circle" by entering into cell "A1" also a formula which makes it part of a circular reference, the user may choose a menu item "close circle". The user may then be prompted to input the cells which should form a part of the circular reference, and he may then input the cell names "A1" to "D1". Thereafter an algebraic tool will replace the content of cell "A1" by a suitable mathematic expression derived from the other cell definitions contained in the circular reference, thereby arriving at the formula for "A1" as shown in Fig. 3.

Instead of such an algebraic method of making the contents of the cells of a line self-consistent, it is also possible to use a numerical approach. If for example in the case of Fig. 2 the new values for cells "C1" and "D1" have been calculated, the user could request by a special menu item a process which could be called "make line self-consistent". It would then be checked for each cell which is referenced by the cell where a value has been directly input, such as the cell "A1" in case of Fig. 2, whether its content still matches with the newly inputted value. For that purpose the formula contained in "B1" which has not been deleted and not been overwritten by the value "4" is used to calculate "A1-2", and it is then recognized that this does not match with the newly inputted value "4". Thereafter, by any numerical method a new value for the content of cell "A1" can be calculated which matches with the new value of "4" of cell "B1" and which fits the formula "B1=A1-2".

According to a further preferred embodiment, for cells which form part of a circular reference the option to input directly values without overriding the formulas or functions contained in a cell is the predefined input option. This avoids the necessity for the user to choose a particular menu item for selecting this option. A user can therefore directly input values into cells containing formulas which form part of a circular reference. The predefined user setting may also be selectable in an option menu such that either the option to directly input values without overriding formulas is selected as the defined setting, or that for the other case the "normal" input procedure is selected. In the latter case then only in case of explicitly requesting the direct value input this option is provided to the user.

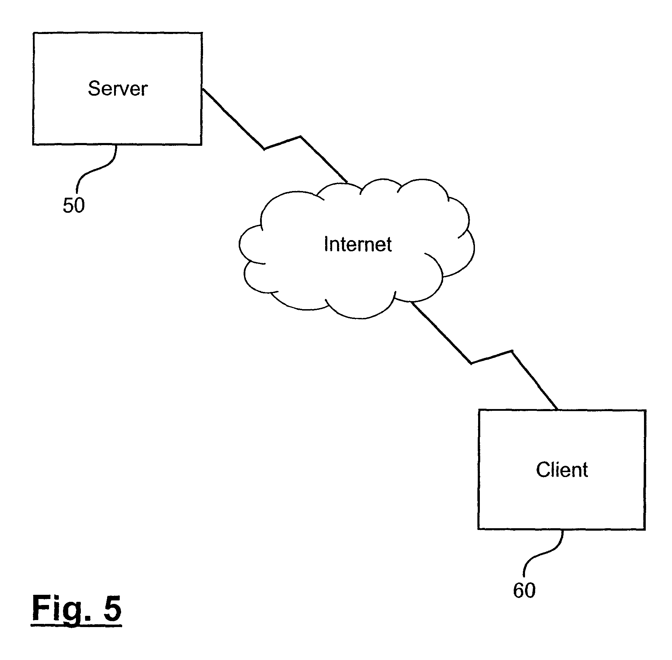

A process according to an embodiment of the present invention is schematically illustrated in the flowchart shown in Fig. 4. Fig. 5 schematically illustrates the dependencies of individual cells in a circular reference. Therein the solid lines show the dependencies for a "normal" circular reference where no numerical value has been inputted. The dashed line shows how the dependencies change after a numerical value has been inputted.

It should be noted that the input of the numerical value does not overwrite the formula contained in the cell "B" in the aforementioned embodiments, but rather it is used for recalculating the contents of the cells after having inputted the numerical value.

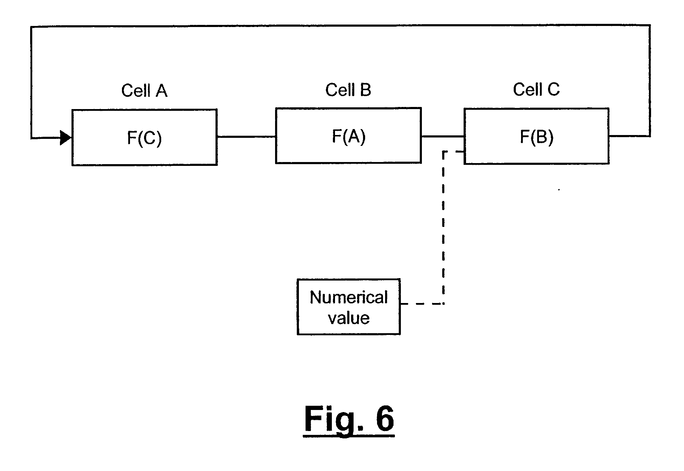

The present invention is applicable to a hardware configuration like a personal computer or a work station as illustrated schematically in Fig. 6. The computer may comprise a central processing unit CPU 26, an input output I/O unit 21, an internal memory 22 and an external memory 24. The computer may further comprise standard input devices like a keyboard 23, a mouse 28 or a speech processing means (not illustrated).

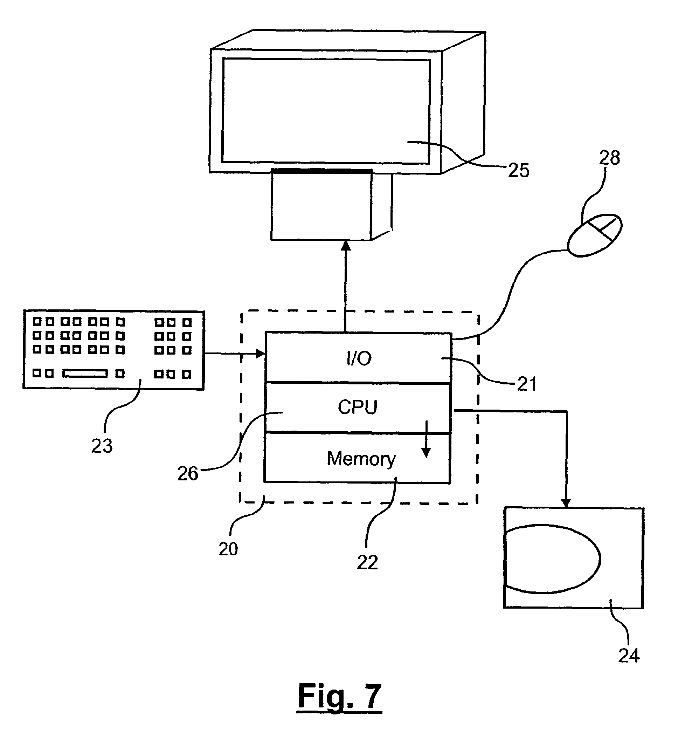

The invention, however, may also be applied to a client-server configuration as illustrated in Fig. 7. The document may be displayed on a display screen of a client device 60 while some or all steps of the method as illustrated before in connection with Figs. 1 and 2 are carried out on a server computer accessible by a client device over a data network as the internet using browser application or the like.

While the invention has been particularly shown with the reference to a preferred embodiment thereof, it will be understood by those skilled in the art that various other changes in the form and details may be made therein without departing from the spirit and scope of the invention.

## Claims

1. A computer-implemented method for enabling a user to input data into a document comprising cells being arranged in columns and rows, said method comprising:
enabling the user to directly input data into individual cells;
enabling the user to input references into cells to define the content of a cell by referring to the content of another cell being referenced;
and further comprising:
providing the user with an option to directly input data into a cell which references another cell without deleting the reference to the other cell.

2. The method according to claim 1, wherein said document is a spreadsheet document.

3. The method according to one of claims 1 or 2, further comprising:
automatically calculating the contents of the cells being directly or indirectly referenced by the cell for which the option to directly input data has been used so that the content of the cells being referenced directly or indirectly match with the content which has been directly inputted by employing the user option.

4. The method according to one of claims 1 to 3, wherein said cell referencing another cell forms a part of a circular reference.

5. The method according to claim 4, wherein after employing the user option to directly input data into a cell contained in a circular reference the whole circle is recalculated based on the directly inputted new data.

6. The method according to one of claims 1 to 5, wherein said option is provided as a separate menu item which can be selected by the mouse and/or wherein on chosing said option an input window or an input cell pops up for inputting said data.

7. The method according to one of claims 1 to 6, wherein said option is provided to the user only after having checked that a cell selected by the user for employing said option is part of a circular reference.

8. The method according to one of claims 1 to 6, further comprising:
providing the user with an algebraic tool assisting the user with changing a non-circular reference into a circular reference.

9. The method according to claim 6, further comprising:
automatically changing a non-circular reference into a circular reference based on a request by the user.

10. The method according to one of claims 1 to 9, wherein said option is the predefined setting for inputting data into cells forming part of a circular reference.

11. A computer system for enabling a user to input data into a document comprising cells being arranged in columns and rows, said system comprising a memory (22) for storing the document data and a processing unit (26) for carrying out the steps of:
enabling the user to directly input data into individual cells;
enabling the user to input references into cells to define the content of a cell by referring to the content of another cell being referenced;
and further comprising:
providing the user with an option to directly input data into a cell which references another cell without deleting the reference to the other cell.

12. The computer system of claim 11, wherein said document is a spreadsheet document.

13. The computer system of claim 11 or 12, wherein said steps further comprise:
automatically calculating the contents of the cells being directly or indirectly referenced by the cell for which the option to directly input data has been used so that the content of the cells being referenced directly or indirectly match with the content which has been directly inputted by employing the user option.

14. The computer system of one of claims 11 to 13, wherein said cell referencing another cell forms a part of a circular reference.

15. The computer system of claim 14, wherein after employing the user option to directly input data into a cell contained in a circular reference the whole circle is recalculated based on the directly inputted new data.

16. The computer system of one of claims 11 to 15, wherein said option is provided as a separate menu item which can be selected by the mouse and/or wherein on chosing said option an input window or an input cell pops up for inputting said data.

17. The computer system of one of claims 11 to 16, wherein said option is provided to the user only after having checked that a cell selected by the user for employing said option is part of a circular reference.

18. The computer system of one of claims 11 to 17, further comprising:
providing the user with an algebraic tool assisting the user with changing a non-circular reference into a circular reference.

19. The computer system of one of claims 11 to 18, further comprising:
automatically changing a non-circular reference into a circular reference based on a request by the user.

20. The computer system of one of claims 11 to 19, wherein said option is the predefined setting for inputting data into cells forming part of a circular reference.

21. A computer program for enabling a user to input data into a document comprising cells being arranged in columns and rows, said computer program comprising program code for executing the following steps:
enabling the user to directly input data into individual cells;
enabling the user to input references into cells to define the content of a cell by referring to the content of another cell being referenced;
and further comprising program code for
providing the user with an option to directly input data into a cell which references another cell without deleting the reference to the other cell.

22. A computer program product for enabling a user to input data into a document comprising cells being arranged in columns and rows, said computer program product comprising program code for executing the following steps:
enabling the user to directly input data into individual cells;
enabling the user to input references into cells to define the content of a cell by referring to the content of another cell being referenced;
and further comprising program code for
providing the user with an option to directly input data into a cell which references another cell without deleting the reference to the other cell.
